# EUROPÄISCHE PATENTSCHRIFT

(11) **EP 3 278 427 B1**
(45) Veröffentlichungstag und Bekanntmachung des Hinweises auf die Patenterteilung: **09.03.2022**
(21) Anmeldenummer: 16701362.2
(22) Anmeldetag: 25.01.2016
(51) Int. Cl.: H02K 9/14, H02K 11/33, H02K 9/06, H02K 5/20

(54) **ELEKTROMOTOR MIT DRÜCKENDER KÜHLLUFTFÖRDERUNG SOWIE VERFAHREN ZUM KÜHLEN VON BAUTEILEN DES ELEKTROMOTORS**
ELECTRIC MOTOR COMPRISING PRESSING COOLING AIR CONVEYANCE AND METHOD FOR COOLING COMPONENTS OF THE ELECTRIC MOTOR
MOTEUR ÉLECTRIQUE PRÉSENTANT UN APPORT D'AIR DE REFROIDISSEMENT COMPRIMÉ AINSI QUE PROCÉDÉ POUR LE REFROIDISSEMENT D'ÉLÉMENTS DU MOTEUR ÉLECTRIQUE

(30) Priorität: 02.04.2015 DE 102015105188
(43) Veröffentlichungstag der Anmeldung: 07.02.2018
(73) Patentinhaber: EBM-Papst Mulfingen GmbH&CO. KG, 74673 Mulfingen (DE)
(72) Erfinder: BOHL, Katrin, 70799 Filderstadt (DE); PFAFF, Christian, 74653 Künzelsau (DE)
(74) Vertreter: Staeger & Sperling Partnerschaftsgesellschaft mbB
(86) Internationale Anmeldenummer: PCT/EP2016/051412
(87) Internationale Veröffentlichungsnummer: WO 2016/155898

(56) Entgegenhaltungen:
- WO-A2-2014/019853
- JP-A- 2000 224 821
- JP-A- 2004 197 714
- US-A1- 2012 262 021

## Beschreibung

### Beschreibung:

Die Erfindung betrifft einen Elektromotor mit einem Elektronikgehäuse und einer benachbart angeordneten Statorbuchse, wobei über ein Kühllaufrad ein von außen angesaugter Kühlluftstrom ins Innere des Elektronikgehäuses und der Statorbuchse gefördert wird. Ferner betrifft die Erfindung ein Verfahren zum Kühlen von Bauteilen des Elektromotors. Ein solcher Elektromotor und ein solches Verfahren sind aus der WO 2014/019853 A2 bekannt.

Die erfindungsgemäßen Elektromotoren werden insbesondere zum Antrieb von Ventilatoren eingesetzt. Dabei werden sie regelmäßig über die Statorbuchse an Befestigungswänden oder Tragkonstruktionen montiert, wodurch eine effektive Kühlung erschwert wird. Der Leistungsbereich sowie die Lebensdauer des Elektromotors bestimmen sich unter anderem auch nach den im Betrieb erreichten Bauteiltemperaturen, vor allem der integrierten Motorelektronik, elektrischen Leistungsbauteile, Lager und Motorantriebsbauteile.

Aus dem Stand der Technik ist bekannt, die temperaturempfindlichen Bauteile aktiv mittels eines in den Motoraufbau integrierten Kühllaufrads zu kühlen. Dabei wird zur Erreichung einer guten Kühlwirkung stets darauf geachtet, dass der von dem Kühllaufrad erzeugte Kühlluftstrom so direkt wie möglich zu den zu kühlenden Motorbauteilen, insbesondere den Elektronikbauteilen gefördert wird, um einen möglichst großen Temperaturunterschied zwischen dem Kühlluftstrom und den zu kühlenden Bauteilen ausnutzen zu können. Konstruktiv wird ausdrücklich vermieden, den Kühlluftstrom vorher innerhalb des Motors an anderen, seine Temperatur erhöhenden Bauteilen vorbeizuführen. Es ist im Stand der Technik deshalb stets vorgesehen, den Kühlluftstrom im Bereich des Elektronikgehäuses anzusaugen und unmittelbar über die bzw. entlang der Elektronikbauteile zu fördern, um eine hauptsächlich auf den Temperaturunterschied zurückgehende Kühlung der empfindlichen Komponenten zu erreichen. Bei dieser Lösung ist jedoch nachteilig, dass die in das Kühllaufrad eintretende Luft vorher durch Elektromotorbauteile wie das Elektronikgehäuse oder die Statorbuchse gefördert wurde und eine stationär unsymmetrische, turbulenzbehaftete Zuströmung zum dem Kühllaufrad bedingt, wodurch dessen Geräuschentwicklung hoch ist.

Weiterer Stand der Technik auf diesem technischen Gebiet ist zudem aus den Offenbarungen der US 2012/0262021 und der JP2004 197714A bekannt.

Der Erfindung liegt deshalb die Aufgabe zugrunde, einen Elektromotor bereitzustellen, bei dem eine ausreichende Kühlung der temperaturempfindlichen Bauteile bei deutlich reduzierter Geräuscherzeugung durch das Kühllaufrad gewährleistet ist. Ferner ist es Aufgabe der Erfindung, ein Verfahren zum Kühlen eines derartigen Elektromotors bereitzustellen.

Diese Aufgaben werden gelöst durch die Merkmalskombinationen gemäß der Patentansprüche 1 und 9.

Erfindungsgemäß weist dabei der Elektromotor ein Elektronikgehäuse mit integrierter Motorelektronik, eine axial zu dem Elektronikgehäuse benachbart angeordnete Statorbuchse zur Aufnahme eines Stators und ein axial zu der Statorbuchse benachbart angeordnetes, über einen als Außenläufer ausgebildeten Rotor antreibbares Kühllaufrad aufweist, das drehfest mit dem Rotor verbunden ist. Die die Statorbuchse ist axial zwischen dem Elektronikgehäuse und dem Rotor angeordnet. In der Statorbuchse und dem Elektronikgehäuse ist ein strömungsverbundener axialer Durchgangskanal vorgesehen, durch den ein von dem Kühllaufrad erzeugter Kühlluftstrom gefördert wird. Erfindungsgemäß weist das Kühllaufrad eine Schaufelgeometrie auf, durch die im bestimmungsgemäßen Betrieb des Elektromotors der Kühlluftstrom an einem umfänglichen radialen Lufteinlass des Kühllaufrads radial außenseitig angesaugt und in axialer Richtung durch den Durchgangskanal gefördert beziehungsweise gedrückt wird. Zudem ist axial zwischen der Statorbuchse und dem Rotor das als Radiallüfterrad ausgebildete Kühllaufrad mit vorwärtsgekrümmten Schaufeln angeordnet. Dadurch, dass das Kühllaufrad den Kühlluftstrom aus der Umgebung ansaugt, ist die von außen (Umgebungsluft) in das Kühllaufrad eintretende Strömung ungestört und im Wesentlichen turbulenzfrei. Die Geräuschentwicklung beim Eintritt der Luft in das Kühllaufrad, insbesondere beim Kontakt mit den Schaufeln des Kühllaufrads ist messbar deutlich geringer. Vor allem Drehklänge, die bei einer stationär unsymmetrischen Zuströmung bei einem saugenden Kühlluftrad erzeugt werden, werden durch die erfindungsgemäße Ausführung mit einer radialen Ansaugung und einer drückenden, axialen Ausströmung reduziert.

Als messbarer Unterschied gegenüber einer durch die Gehäuse saugenden Ausführung gemäß dem Stand der Technik ergibt sich bei der erfindungsgemäßen Lösung mit einem durch die Gehäuse drückenden Kühlluftstrom eine Geräuschreduzierung des Schalldruckpegels beim ersten Drehklang (Blade Passing Noise/Frequency) bzw. dem ersten Schaufeldrehklang von über 20-30% (z.B. von 93dB auf 72 dB und 80dB auf 57dB). Der Drehklang setzt sich dabei aus dem Drehton und seinen Harmonischen zusammen. Die Frequenz des Drehtons ergibt sich aus dem Produkt der Drehzahl des Ventilators und der Anzahl der Schaufeln. Die Harmonischen des Drehtons sind jeweils ein ganzzahliges Vielfaches davon. Für die jeweilige Frequenz des Drehtons und seiner Harmonischen ergeben sich Überhöhungen des Schalldruckpegels. Diese sind vor allem im niederfrequenten Bereich besonders hoch.

Erfindungsgemäß wird aktiv in Kauf genommen, dass die über das Kühllaufrad in radialer Umfangsrichtung angesaugte Luft nicht unmittelbar dem Elektronikgehäuse bzw. den darin aufgenommenen Elektronikbauteilen zugeführt, sondern erst über den Durchgangskanal durch die Statorbuchse gefördert wird. Dabei kann zwar eine gewisse geringe Vorwärmung erfolgen, jedoch wird diese ausgeglichen durch höhere Turbulenzgrade und Verwirbelung der Kühlluftströmung beim Abstrahlen aus dem Kühllaufrad und dem Einströmen in den bzw. dem Durchströmen durch den Durchgangskanal. Die verstärkte Luftbewegung entlang der Statorbuchse und dem Elektronikgehäuse führt zu einer effizienteren Wärmeübertragung, wodurch wiederum ein geringerer absoluter Volumenstrom benötigt wird, um eine vergleichbare Kühlung zu erzielen. Die erhöhte Luftbewegung gleicht mithin die höhere Ausgangstemperatur beim Vorbeiströmen an den zu kühlenden Bauteilen aus. Durch den geringeren Volumenstrom reduziert sich ferner die benötigte Antriebsleistung des Kühllaufrads.

Ein weiterer vorteilhafter Aspekt der Erfindung ist die Tatsache, dass das Kühllaufrad die Kühlluft nicht weiter axial bei dem Elektronikgehäuse, sondern radial benachbart zu der Statorbuchse ansaugt. Häufig ist das Elektronikgehäuse derart verbaut, dass es mit seiner Luftöffnung nach außen in die Umwelt weist und die Gefahr besteht, Verunreinigungen der Luft, Laub oder dergleichen anzusaugen und die Luftöffnung am Elektronikgehäuse zu verstopfen. Laub kann sich ferner auch im Stillstand des Elektromotors auf dem Elektromotorgehäuse ablagern und ein Ansaugen von Kühlluft verhindern, soweit die Luftöffnung im eingebauten Zustand nach oben weist. Bei der erfindungsgemäßen Lösung mit einem radial ansaugenden und axial an dem Elektronikgehäuse ausblasenden Kühllaufrad wird abgelagertes Laub weggeblasen. Zudem sind andere Verschmutzungen ausgeschlossen, da der radiale Ansaugbereich des Kühllaufrades üblicherweise nur von sauberer Luft beströmt wird. Reinigungsarbeiten an dem Motor sind somit nicht oder nur seltener nötig.

In einer vorteilhaften Ausführung der Erfindung ist die Schaufelgeometrie des Kühllaufrades vorwärtsgekrümmt ausgebildet. Hierdurch wird eine radiale Ansaugung und eine axial ausblasende, drückende Strömung erzeugt.

In einer Ausführungsform der Erfindung ist vorgesehen, dass sich der Durchgangskanal entlang der Statorbuchse, entlang des Elektronikgehäuses und bis zu einem Luftauslass am Elektronikgehäuse erstreckt. Die Kühlluftströmung kann dabei Wärme sowohl von der Statorbuchse und den daran angeschlossenen Bauteilen sowie dem Elektronikgehäuse und den darin angeordneten Elektronikbauteilen aufnehmen und abtransportieren.

Der Durchgangskanal ist in seinem Querschnitt variabel und in einem Ausführungsbeispiel derart gestaltet, dass sein Volumen in einem Bereich des Elektronikgehäuses gegenüber einem Bereich der Statorbuchse um ein Vielfaches größer ist. Das bedeutet, dass der Durchgangskanal im Bereich des Elektronikgehäuses räumlich deutlich größer ist und die Elektronikbauteile großflächig umströmt.

Zur weiteren Verstärkung der Kühlwirkung sind am Elektronikgehäuse und/oder der Statorbuchse Kühlrippen ausgebildet, die zumindest abschnittsweise in den Durchgangskanal weisen, so dass der Kühlluftströmung eine möglichst große Kontaktfläche zu den zu kühlenden Bauteilen gewährt wird.

Durch geometrische Maßnahmen kann die Kühlluft-Strömung weiter in ihrer Richtung und Turbulenzbildung beeinflusst werden. So weist der Durchgangskanal in einer Ausführung an der Statorbuchse auf einer zu dem Kühllaufrad weisenden Seite eine gerundete Einlaufgeometrie auf, um die Strömung entlang der Außenwand der Statorbuchse zu leiten. In einem weiteren Ausführungsbeispiel weist der Durchgangskanal an der Statorbuchse auf einer zu dem Elektronikgehäuse weisenden Seite eine auf die Motorelektronik gerichtete Auslaufgeometrie auf. Hierdurch kann ein Anströmen von besonders heiß werden Bauteilen mit vergleichsweise höherer Kühlung ermöglicht werden.

Zum Leiten der Kühlluftströmung werden bei einer günstigen Lösung der Erfindung ferner in dem Durchgangskanal Luftleitelemente angeordnet, die zur Turbulenzbildung oder zum Anströmen bestimmter Bauteilgruppen dienen können. Die Luftleitelemente können im Bereich der Statorbuchse und/oder dem Elektronikgehäuse verbaut sein. Dabei können die Luftleitelemente selbst als Kühlrippen ausgebildet sein.

Die Erfindung umfasst ferner ein Verfahren zum Kühlen von Elektronikbauteilen des erfindungsgemäßen Elektromotors, wobei das Kühllaufrad im bestimmungsgemäßen Betrieb des Elektromotors einen Kühlluftstrom erzeugt, der an dem umfänglichen radialen Lufteinlass des Kühllaufrads radial außenseitig angesaugt und in axialer Richtung durch den Durchgangskanal gedrückt wird, so dass der Kühlluftstrom zumindest entlang der Statorbuchse und des Elektronikgehäuses bis zu dem Luftauslass an dem Elektronikgehäuse strömt. Zudem können alle vorstehend zum Kühlen des Elektromotors beschriebenen Merkmale Teil des Verfahrens sein.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: ein seitlicher Querschnitt eines Elektromotors;
- Fig. 2: ein vergrößerter Teilausschnitt X1 aus Figur 1,
- Fig. 3: einen Ausschnitt einer Seitenansicht eines Kühllaufrads
- Fig. 4: ein Diagramm zur Darstellung der Geräuschentwicklung des Kühllaufrades bei unterschiedlichen Frequenzen.

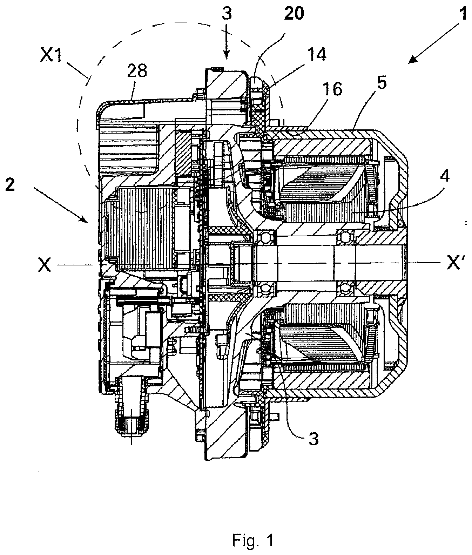

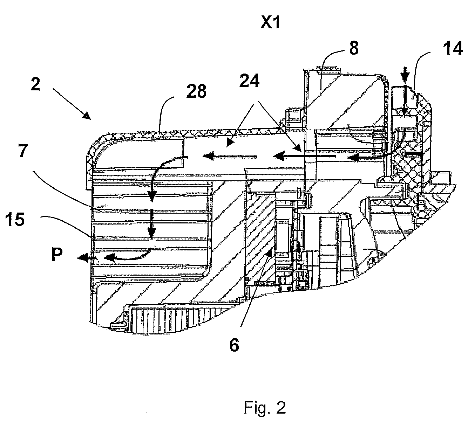

Die Figuren sind beispielhaft schematisch und zeigen in den Figur 1 und 2 einen Elektromotor 1 mit einem Elektronikgehäuse 2, einem Stator mit einer Statorbuchse 3, einem Statorblechpaket 4 und Motorwicklungen sowie einem Rotor 5, der in der gezeigten Ausführung als Außenläuferrotor ausgebildet ist. Die Statorbuchse 3 ist axial zwischen Elektronikgehäuse 2 und Rotor 5 angeordnet. In dem Elektronikgehäuse 2 ist die Motorelektronik zum Antrieb und zur Steuerung des Motors, insbesondere eine Kommutierungselektronik mit elektrischen Leistungsbauteilen 6, aufgenommen. Das Elektronikgehäuse 2 weist eine Gehäuseabdeckung 28 auf, an der Gehäusekühlrippen 7 zur Kühlung der Motorelektronik innerhalb des Elektronikgehäuses 2 ausgebildet sind. Die Statorbuchse 3 weist an ihrer dem Rotor 5 gegenüberliegenden Außenwand radial verlaufende und sich in Richtung des Rotors 5 axial erstreckende Statorkühlrippen 8 auf, die insbesondere im Bereich des Statorkugellagers und den Motorwicklungen entstehende Wärme ableiten.

Axial zwischen der Statorbuchse 3 und dem Rotor 5 ist das als Radiallüfterrad ausgebildete Kühllaufrad 14 mit vorwärtsgekrümmten Schaufeln angeordnet. Anders als bei vorwärtsgekrümmten Radiallüfterrädern gemäß dem Stand der Technik, tritt der Luftstrom von außen in das Kühllaufrad 14 ein und innenseitig aus. Das Kühllaufrad 14 ist mit dem Rotor 5 drehfest verbunden und weist eine in radialer Richtung vollständig umlaufende Ansaugöffnung 20 als Lufteinlass und eine zur Statorbuchse 3 weisende axiale Ausblasöffnung 15 als Luftauslass auf. Im Motorbetrieb saugt das Kühllaufrad 14 durch die Ansaugöffnung 20 Umgebungsluft von radial außen an und bläst diese axial an der Ausblasöffnung 15 in Richtung des Durchgangskanals 24 aus.

Durch die Statorbuchse 3 und das Elektronikgehäuse 2 erstreckt sich der axiale Durchgangskanal 24, wobei sich sein Volumen im Bereich des Elektronikgehäuses 2 um ein Vielfaches vergrößert. Der Durchgangskanal 24 verläuft ausgehend vom Kühllaufrad 14 entlang der Außenwand der Statorbuchse 3 und der Innenwand des Elektronikgehäuses 2 bis zu einem axialen Luftauslass 15 an dem Elektronikgehäuse 2.

Durch das Kühllaufrad 14 wird die radial angesaugte Luft im Bereich des Einlaufbereichs des Durchgangskanals 24 axial ausgeblasen, so dass der Kühlluftstrom entlang der Pfeile P in den Durchgangskanal 24 eintritt und in axialer Richtung über die Statorbuchse 3 und das die Elektronikbauteile 6 aufnehmende Elektronikgehäuse 2 strömt. Im Bereich der Statorbuchse 3 verläuft der Kühlluftstrom im Durchgangskanal 24 in etwa parallel zur Motorachse X-X', im Bereich des Elektronikgehäuses 2 weitet er sich auf und umströmt die innerhalb des Elektronikgehäuses 2 angeordnete Bauteile großflächig.

Die Statorbuchse 3 und das Elektronikgehäuse 2 sind vorzugsweise aus Metall, das Kühllaufrad 14 aus Kunststoff.

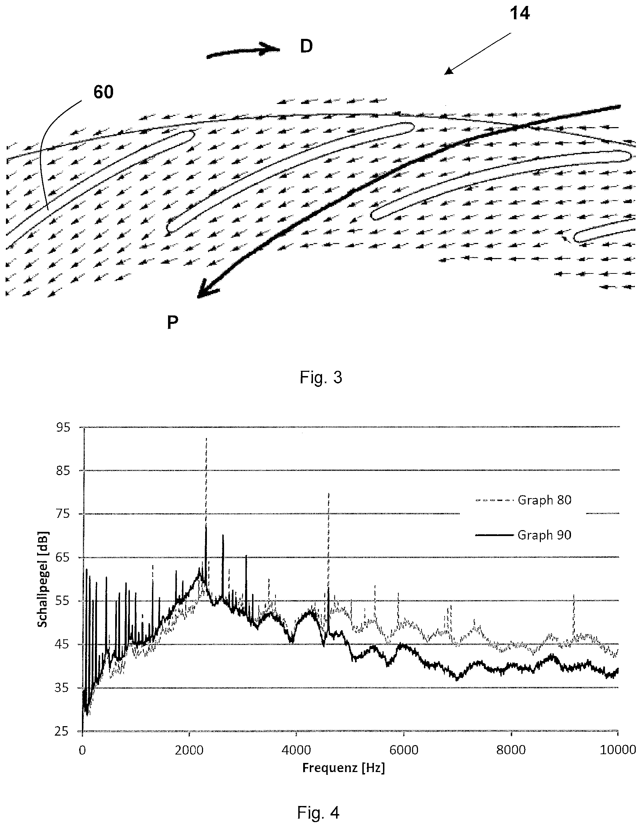

Figur 3 zeigt einen Ausschnitt einer Seitenansicht eines Kühllaufrads 14 mit vorwärtsgekrümmten Schaufeln 60 und einer Drehrichtung D, wobei die Schaufeln 60 einen radial angesaugten und axial ausblasenden Kühlluftstrom P in Richtung des Durchgangskanals 24 erzeugen.

In Figur 4 ist das Messergebnis des Schallpegels gegenüber der Frequenz eines Kühlluftrades gemäß dem Stand der Technik mit axial ansaugender und radial ausblasender Strömungsrichtung sowie eines erfindungsgemäßen Kühllaufrades 14 in einem Diagramm dargestellt. Das erfindungsgemäße Kühllaufrad 14 ist mit dem Graphen 90, das Laufrad gemäß dem Stand der Technik mit dem Graphen 80 gekennzeichnet. Es zeigt sich, dass bei identischer Einbausituation das erfindungsgemäße Kühllaufrad 14 über den gesamten Frequenzbereich geringere Schallpegel aufweist als die saugende Ausführung gemäß dem Stand der Technik. Die eklatantesten Unterschiede des Schallpegels liegen bei Frequenzen von etwa 2300 Hz und 4600 Hz, die durch die erfindungsgemäße Lösung von 93dB auf 72 dB und von 80dB auf 57dB reduziert werden konnten.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Beispielsweise kann anstelle eines einzelnen Durchgangskanals durch die Statorbuchse auch eine Vielzahl von Kanälen vorgesehen werden, die sich im Bereich des Elektronikgehäuses vereinen.

## Patentansprüche

1. Elektromotor, umfassend ein Elektronikgehäuse (2), in dem eine Motorelektronik aufgenommen ist, eine axial zu dem Elektronikgehäuse (2) benachbart angeordnete Statorbuchse (3) zur Aufnahme eines Stators, ein axial zu der Statorbuchse (3) benachbart angeordnetes Kühllaufrad (14), das über einen als Außenläufer ausgebildeten Rotor (5) antreibbar und drehfest mit dem Rotor (5) verbunden ist, wobei die Statorbuchse (3) axial zwischen dem Elektronikgehäuse (2) und dem Rotor (5) angeordnet ist, wobei in der Statorbuchse (3) und dem Elektronikgehäuse (2) ein strömungsverbundener axialer Durchgangskanal (24) vorgesehen ist, durch den ein von dem Kühllaufrad (14) erzeugter Kühlluftstrom förderbar ist, **dadurch gekennzeichnet, dass** das Kühllaufrad (14) eine Schaufelgeometrie aufweist, durch die im bestimmungsgemäßen Betrieb des Elektromotors der Kühlluftstrom an einem umfänglichen radialen Lufteinlass (20) des Kühllaufrads (14) radial außenseitig angesaugt und in axialer Richtung durch den Durchgangskanal (24) gefördert wird und wobei
axial zwischen der Statorbuchse (3) und dem Rotor (5) das als Radiallüfterrad ausgebildete Kühllaufrad (14) mit vorwärtsgekrümmten Schaufeln angeordnet ist.

2. Elektromotor nach Anspruch 1 , **dadurch gekennzeichnet, dass** sich der Durchgangskanal (24) entlang der Statorbuchse (3), entlang dem Elektronikgehäuse (2) und bis zu einem Luftauslass (15) an dem Elektronikgehäuse (2) erstreckt.

3. Elektromotor nach zumindest einem der vorigen Ansprüche, **dadurch gekennzeichnet, dass** ein Volumen des Durchgangskanals (24) in einem Bereich des Elektronikgehäuses (2) gegenüber einem Bereich der Statorbuchse (3) um ein Vielfaches größer ist.

4. Elektromotor nach zumindest einem der vorigen Ansprüche, **dadurch gekennzeichnet, dass** an dem Elektronikgehäuse (2) und/oder der Statorbuchse (3) Kühlrippen (7, 8) ausgebildet sind, die zumindest abschnittsweise in den Durchgangskanal (24) weisen.

5. Elektromotor nach dem vorigen Anspruch, **dadurch gekennzeichnet, dass** sich die Kühlrippen (7, 8) in axialer Richtung erstrecken.

6. Elektromotor nach zumindest einem der vorigen Ansprüche, **dadurch gekennzeichnet, dass** der Durchgangskanal (24) an der Statorbuchse (3) auf einer zu dem Kühllaufrad (14) weisenden Seite eine gerundete Einlaufgeometrie aufweist.

7. Elektromotor nach zumindest einem der vorigen Ansprüche, **dadurch gekennzeichnet, dass** der Durchgangskanal (24) an der Statorbuchse (3) auf einer zu dem Elektronikgehäuse (2) weisenden Seite eine auf die Motorelektronik (6) gerichtete Auslaufgeometrie aufweist.

8. Elektromotor nach zumindest einem der vorigen Ansprüche, **dadurch gekennzeichnet, dass** in dem Durchgangskanal (24) Luftleitelemente angeordnet sind.

9. Verfahren zum Kühlen von Elektronikbauteilen des Elektromotors (1) nach zumindest einem der vorigen Ansprüche, **dadurch gekennzeichnet, dass** das Kühllaufrad (14) im bestimmungsgemäßen Betrieb des Elektromotors (1) einen Kühlluftstrom erzeugt, der an dem umfänglichen radialen Lufteinlass (20) des Kühllaufrads (14) radial außenseitig angesaugt und in axialer Richtung durch den Durchgangskanal (24) gedrückt wird, so dass der Kühlluftstrom zumindest entlang der Statorbuchse (3) und des Elektronikgehäuses (2) bis zu dem Luftauslass (15) an dem Elektronikgehäuse (2) strömt.

## Claims

1. An electric motor comprising an electronics housing (2) in which motor electronics are accommodated, a stator bush (3) for accommodating a stator and which is arranged axially adjacent to the electronics housing (2), a cooling impeller (14) which is arranged axially adjacent to the stator bush (3) and which can be driven via a rotor formed as an external rotor and is connected in a rotationally fixed manner to the rotor (5), wherein the stator bush 3 is arranged axially between electronics housing 2 and rotor 5, wherein a fluidically connected axial through-channel (24) is provided in the stator bush (3) and in the electronics housing (2), through which channel a cooling air flow generated by the cooling impeller (14) can be conveyed, **characterized in that** the cooling impeller (14) has a blade geometry such that, in normal operation of the electric motor, the cooling air is drawn in radially from outside at a peripheral radial air inlet (20) of the cooling impeller (14) and is conveyed through the through-channel (24) in axial direction and wherein the cooling impeller (14) formed as a radial fan wheel is arranged axially between the stator bushing (3) and the rotor (5), wherein the blade geometry of the cooling impeller (14) has a forward curvature.

2. The electric motor according to Claim 1, **characterized in that** the through-channel (24) extends along the stator bush (3), along the electronics housing (2), and to an air outlet (15) on the electronics housing (2).

3. The electric motor according to at least one of the preceding claims, **characterized in that** a volume of the through-channel (24) is greater many times over in an area of the electronics housing (2) compared to an area of the stator bush (3) many times over.

4. The electric motor according to at least one of the preceding claims, **characterized in that**, on the electronics housing (2) and/or the stator bush (3), cooling ribs (7, 8) are formed, which are directed at least in sections into the through-channel (24).

5. The electric motor according to the preceding claim, **characterized in that** the cooling ribs (7, 8) extend in axial direction.

6. The electric motor according to at least one of the preceding claims, **characterized in that** the through-channel (24) has a rounded inlet geometry on the stator bush (3) on a side facing the cooling impeller (14).

7. The electric motor according to at least one of the preceding claims, **characterized in that** the through-channel (24) on the stator bush (3), on a side facing the electronics housing (2), has an outlet geometry directed to the motor electronics (6).

8. The electric motor according to at least one of the preceding claims, **characterized in that** air guide elements are arranged in the through-channel (24).

9. A method for cooling electronics components of the electric motor (1) according to at least one of the preceding claims, **characterized in that**, in normal operation of the electric motor (1), the cooling impeller (14) generates a cooling air flow which is drawn in radially from outside at a peripheral radial air inlet (20) of the cooling impeller (14) and is pressed through the through-channel (24) in axial direction, so that the cooling air flow flows at least along the stator bush (3) and the electronics housing (2) to the air outlet (15) on the electronics housing (2).

## Revendications

1. Moteur électrique, comprenant un boîtier électronique (2) dans lequel l'électronique du moteur est logée, une douille de stator (3) disposée axialement de manière adjacente au boîtier électronique (2) pour recevoir un stator, une roue de refroidissement (14) disposée axialement de manière adjacente à la douille de stator (3), qui peut être entraînée et reliée de manière solidaire en rotation au rotor (5) par l'intermédiaire d'un rotor (5) conçu comme un rotor extérieur, dans lequel la douille de stator (3) est disposée axialement entre le boîtier électronique (2) et le rotor (5), dans lequel un canal traversant axial (24) relié à l'écoulement est prévu dans la douille de stator (3) et le boîtier électronique (2) par lequel un flux d'air de refroidissement généré par la roue de refroidissement (14) peut être transporté, **caractérisé en ce que** la roue de refroidissement (14) présente une géométrie d'aube, permettant, lors du fonctionnement conforme du moteur électrique, d'aspirer le flux d'air de refroidissement radialement vers l'extérieur au niveau d'une entrée d'air radiale périphérique (20) de la roue de refroidissement (14) et de le transporter en direction axiale à travers le canal traversant (24), et dans lequel
la roue de refroidissement (14), qui est conçue comme une roue de ventilateur radiale dotée d'aubes incurvées vers l'avant, est disposée axialement entre la douille de stator (3) et le rotor (5).

2. Moteur électrique selon la revendication 1, **caractérisé en ce que** le canal traversant (24) s'étend le long de la douille de stator (3), le long du boîtier électronique (2) et jusqu'à une sortie d'air (15) sur le boîtier électronique (2).

3. Moteur électrique selon au moins l'une des revendications précédentes, **caractérisé en ce qu'**un volume du canal traversant (24) dans une zone du boîtier électronique (2) est plusieurs fois plus grand que dans une zone de la douille de stator (3).

4. Moteur électrique selon au moins l'une des revendications précédentes, **caractérisé en ce que** des ailettes de refroidissement (7, 8) sont formées sur le boîtier électronique (2) et/ou la douille de stator (3), lesquelles ailettes sont orientées au moins par sections dans le canal traversant (24).

5. Moteur électrique selon la revendication précédente, **caractérisé en ce que** les ailettes de refroidissement (7, 8) s'étendent dans la direction axiale.

6. Moteur électrique selon au moins l'une des revendications précédentes, **caractérisé en ce que** le canal traversant (24) au niveau de la douille de stator (3) présente une géométrie d'entrée arrondie sur un côté tourné vers la roue de refroidissement (14).

7. Moteur électrique selon au moins l'une des revendications précédentes, **caractérisé en ce que** le canal traversant (24) au niveau de la douille de stator (3) présente une géométrie de sortie dirigée vers l'électronique du moteur (6) sur un côté tourné vers le boîtier électronique (2).

8. Moteur électrique selon au moins l'une des revendications précédentes, **caractérisé en ce que** des éléments de guidage d'air sont disposés dans le canal traversant (24).

9. Procédé de refroidissement d'éléments électroniques du moteur électrique (1) selon au moins l'une des revendications précédentes, **caractérisé en ce que** la roue de refroidissement (14) génère un flux d'air de refroidissement lors du fonctionnement conforme du moteur électrique (1), lequel flux est aspiré radialement vers l'extérieur au niveau de l'entrée d'air radiale périphérique (20) de la roue de refroidissement (14) et comprimé dans la direction axiale à travers le canal traversant (24), de sorte que le flux d'air de refroidissement s'écoule au moins le long de la douille de stator (3) et du boîtier électronique (2) jusqu'à la sortie d'air (15) sur le boîtier électronique (2).
